# EUROPEAN PATENT APPLICATION

(11) **EP 2 020 168 A1**
(43) Date of publication of application: **04.02.2009**
(21) Application number: 07015318.4
(22) Date of filing: 03.08.2007
(51) Int. Cl.: A01B 69/00

(54) **Control system for agricultural working vehicles**

(71) Applicant: AGROCOM GmbH & Co. Agrarsystem KG, 33719 Bielefeld (DE)
(72) Inventor: Wilken, Andreas, 49143 Bissendorf (DE); Pein, Christoph, 25462 Reilingen (DE); Huster, Jochen, 33330 Gütersloh (DE); Möller, Jens, Dr., 33778 Rheda-Wiedenbrück (DE); Diekhans, Nobert, Dr., 33335 Gütersloh (DE); Autermann, Ludger, 48317 Drensteinfurt (DE); Hieronymus, Peter, 33758 Schloß-Holte-Stukenbrock (DE); Nienaber, Gerhard, 59302 Oelde (DE); Blas, Marton Rufus, 2200 Copenhagen (DK); Meyer zu Heiligen, Lars-Peter, 32139 Spenge (DE); Kirk, Kristian, 9220 Alborg O. (DK); Madsen, Tommy Ertbolle, 2830 Virum (DK)

(57) **Abstract**

The invention relates to a control system for agricultural working vehicles with at least two sensor systems which generate sensor signals (A, B), wherein the sensor signals (A, B) are vehicle-dependent or dependent on the crop characteristics or a combination of both.

The object of this invention is to develop a control system for agricultural working vehicles in such a manner that a suitable fusion of the sensor signals (A, B) of the sensor systems is achieved, in particular.

This object is achieved according to the invention in that at least one first and at least one second sensor signal processing algorithm (I,II,III,IV,V) is provided in the control system, and in that a selection is made as to which sensor signal processing algorithm (I,II,III,IV,V) is to be used as a function of at least one characteristic parameter (P).

## Description

The invention relates to a control system for agricultural working vehicles according to the preamble of Claim 1.

Control systems for agricultural working vehicles are used, for example, to control so-called tracking systems. The use of tracking systems for fully or partially automatic guide systems of agricultural working vehicles on characteristic virtual or real lines is of considerable, practical importance because the vehicle operator is largely relieved of steering processes that sometimes require great skill, Mechanical tracking systems which generally scan characteristic lines in the territory to be worked by means of mechanical sensors and generate from the detected contours guide signals which guide the vehicle in question along this detected contour have been used for some time. Because such systems are only able to scan the territory in front of the vehicle within a very small circumference, these systems are increasingly being replaced by electronic systems which are generally also able to detect territory to be worked a long distance in front of the working vehicle. Much greater allowance can be made of the inertia of the steering systems concerned when using such systems because of their ability to detect the territory to be worked far in advance.

GPS-based systems are widely used in the field of electronic travel route detection systems. Reference is made here, for example, to DE 101 29 135 A1, which discloses a so-called GPS steering system taking the example of a combine harvester. However, the disadvantage of GPS-based devices for position determination, is that signal falsifications caused in particular by run-time errors of the GPS signal or reception interference may result in substantial interferences in the automatic steering of the vehicle. Under certain circumstances this may lead to a situation where the working vehicle is steered out of the track that is actually to be worked, so that the work quality of the vehicle is substantially impaired. To limit these disadvantages a method is proposed in DE 101 29 135 A1 for coupling the GPS-based travel route detection system to a further travel route detection system, for example a laser scanning system or an image processing system. The position signals generated by the systems used are then related to each other in a control and evaluation unit. The particular disadvantage of such a system is that it is always coupled to the position data of two travel route detection systems. If one or both position signals fail(s), a substitute position signal is then generated, which may sometimes deviate considerably from the actual position of the working vehicle. The poorer the quality of the position signals received from the individual travel route detection systems, the greater this deviation will be. Moreover, such an interaction of a plurality of travel route detection systems does not allow for the fact that in the presence of stamped optical reference lines in the territory to be worked, travel route detection systems sensing the territory directly provide more accurate position data than GPS-based systems because they directly reproduce the actual conditions in the territory.

Since a multiplicity of applications require a precise reproduction of the actual geographical conditions in a territory to be worked, systems have been known from the state of the art, DE 103 28 395 A1 for example, which fully replaces the GPS-based position data determination with camera-based systems. In the system represented the travel distance of the agricultural working vehicle, constructed as a tractor, is recorded by means of an image recording device arranged on the tractor. The images generated are then compared in a control and evaluation unit with image data on the theoretical travel route stored there, and a correction of the travel route is then made on the basis of the comparison by generating the required guide signals. Since the tracking system disclosed in DE 103 28 395 A1 forces the working vehicle onto a pre-defined travel route similarly to GPS-based systems, this theoretical travel route must firstly be predetermined. Secondly this predetermined travel route may then deviate considerably from the actual condition if optimum crossing of the territory, sparing on the crops due to growth conditions, would require a route across the territory that deviates from the pre-defined travel route. In such a case the crop stands would be driven over, with the associated yield losses. Such systems therefore suffer from the same disadvantages as GPS-based systems because a GPS-based system is imitated structurally with a system according to DE 103 28 395 A1.

To avoid the disadvantages of the aforementioned state of the art, DE 10 2005 041 550 A1 describes a tracking system for agricultural working vehicles in which two independently acting tracking systems, in the form of a GPS-based tracking system and in the form of a camera-based tracking system, are connected to each other in such a manner that switching between the two tracking systems is possible during tracking on the basis of control criteria. The disadvantage of this, however, is that only one of the tracking systems can be used at any one time and they cannot be connected to each other in such a manner that an additional benefit is provided in terms of controlling the agricultural working machine.

The object of this invention is to develop a control system for agricultural working vehicles with at least two sensor systems which generate sensor signals which are vehicle-dependent or dependent on crop characteristics or dependent on the environment, or a combination of these, in such a manner that the disadvantages of the state of the art described are avoided and, in particular, a suitable fusion of sensor signals from the sensor systems is achieved.

This object is achieved according to the invention by the characterising features of Claim 1.

Because at least a first and at least a second sensor signal processing algorithm is present in the control system, and in that a selection is made as a function of at least one characteristic parameter, which sensor signal processing algorithm is to be used, the sensor signals from the sensor systems are always connected to each other and/or used together in the manner required by the prevailing situation. The at least one characteristic parameter is here the indicator of the relevant situation requirement. Because the control system is able to select from different sensor signal processing algorithms as a function of characteristic parameters, it becomes possible to make optimum use of the sensor signals present at all times, according to the situation. The selection of sensor signal processing algorithms therefore extends far beyond a simple switching of sensor signals, and also far beyond a simple combination of sensor signals and a simple correction of sensor signals, because for the first time the selection provides the possibility of avoiding the various disadvantages of the individual sensor signal processing algorithms by making available to the control system of the agricultural working machine at least a second sensor signal processing algorithm which allows better control in the particular situation.

At least one sensor signal processing algorithm is advantageously designed so that selects at least one sensor signal of the at least two sensor systems for signal processing. However, a sensor signal processing algorithm may also be designed so that it balances at least two sensor signals from at least two sensor systems with each other. Moreover, a sensor signal processing algorithm is designed so that a sensor signal from at least one sensor system is used for correcting a sensor signal from a second sensor system. Furthermore, a sensor signal processing algorithm may be designed so that it switches between the sensor signals from at least two sensor systems as a function of general conditions. Moreover a sensor signal processing algorithm combined at least one sensor signal processing algorithm with at least one another sensor signal processing algorithm to generate a control signal. A number of further designs of sensor signal processing algorithms are also conceivable, so that this list must be regarded neither as limiting nor final. Two or a plurality of signal processing algorithms are always present in the control system.

In an advantageous design of the invention the at least one characteristic parameter is the accuracy of the control signal generated by the sensor signal processing algorithms, so that if a very accurate control of the agricultural working vehicle is required, the sensor signal processing algorithm which supplies the most accurate control signal after the signal processing is used.

In an alternative advantageous design of the invention the at least one characteristic parameter is the accuracy of the sensor signals of the at least two sensor systems, so that if a very accurate control of the agricultural working vehicle is required, the sensor signal processing algorithm which used the most accurate sensor signals is used.

In an alternative advantageous design of the invention the at least one characteristic parameter is the noise on the sensor signals of the at least two sensor systems, so that if a very accurate control of the agricultural working vehicle is required, the sensor signal processing algorithm which used the sensor signals with the fewest noise is to be used.

In an alternative advantageous design of the invention the at least one characteristic parameter is the availability of the sensor signals from the at least two sensor systems, so that if individual sensor signals are not available, the control system selects a sensor signal processing algorithm which does not require the unavoidable sensor signal for controlling the working vehicle.

In an alternative advantageous design of the invention the at least one characteristic parameter is the topicality of the sensor signals of the at least two sensor systems, so that if a very directly control of the agricultural working vehicle is required, the sensor signal processing algorithm which used the most topicality sensor signals is to be used.

In an alternative advantageous design of the invention the at least one characteristic parameter is the costs incurred in receiving and generating the sensor signals of the at least two sensor systems, so that the control system always selects the sensor signal processing algorithm which uses the lowest cost, in the best case free of charge sensor signals for generating the control signal.

In an alternative advantageous design of the invention the at least one characteristic parameter is the time required to receive or generate the sensor signals of the at least two sensor systems, so that the control system always selects the sensor signal processing algorithm which uses the sensor signals that are made available in the fastest and/or most relevant manner.

In an alternative advantageous design of the invention the at least one characteristic parameter is the weather conditions surrounding the agricultural working vehicle, so that the control system always selects the sensor signal processing algorithm which is least affected by the weather conditions influencing the individual sensor signals from individual sensor systems and/or which best compensates for the influence on the sensor signals from individual sensor systems.

In an alternative advantageous design of the invention the at least one characteristic parameter is the soil conditions surrounding the agricultural working vehicle, so that the control system always selects the sensor signal processing algorithm which is least affected by the soil conditions influencing the individual sensor signals from individual sensor systems and/or which best compensates for the influence on the sensor signals from individual sensor systems.

In an alternative advantageous design of the invention the at least one characteristic parameter is the reliability of the sensor signals from at least two sensor systems, so that if the reliability of individual sensor signals is not adequate, the control system selects a sensor signal processing algorithm which does not require the sensor signal not made available in an adequate reliability for controlling the working vehicle. Reliability must be understood here to mean that although the sensor signal is made available, it does not represent the actual conditions, and is therefore of poor reliability, due for example to an incorrect measurement and/or other circumstances such as considerable dust development, having a negative influence on the sensor signals, in the recording area of an optical sensor designed as a camera.

In an alternative advantageous design of the invention the at least one characteristic parameter is the employment which is to be done with the control system, so that the control system always selects the sensor signal processing algorithm which will be produce the best result for the individual employment.

In an alternative advantageous design of the invention the at least one characteristic parameter is the security of the working vehicle, so that the control system always selects the sensor signal processing algorithm which will be protect the working vehicle as best as possible.

A plurality of characteristic parameters are advantageously stored in the control system so that, according to the situation during the use of the agricultural working vehicle, the parameter that is most suitable for the prevailing situation may be used. In this case the characteristic parameters may be used in a weighted manner, which weighting can also be varied according to the situation so that the best working result can always be achieved with the agricultural working vehicle.

The control system according to the invention is advantageously constructed so that the at least two sensor systems are designed as an optical sensor, for example as a camera, and as a global positioning sensor (GPS sensor) for track detection, and at least one further sensor system designed as an infrared sensor and/or thermal sensor is provided for crop characteristic detection, the sensor signals from the track detection sensor systems and the sensor signals from the at least one crop characteristic detection sensor system being combined and stored so that they can be recalled. Such a control system is used, for example, for accurate surface surveying where there is recording not only of the yield quantity but also of the quantity of nutrient taken from the field, so that these recorded data can be used for accurately establishing the quantity of fertiliser in a subsequent work step.

Alternatively the control system according to the invention is advantageously constructed in such a manner that the at last two sensor systems are designed as an optical sensor, for example as a camera, and as a low precision global positioning sensor (GPS sensor), the sensor signals from the at least two sensor systems being used for track detection with reference to a swathe covered on the field. In such a control system for track detection with reference to a swathe covered on the field, little demands are made on accuracy because the width of the swathe is relatively small in relation to the width of a crop recorder. It is therefore possible to use a low precision global positioning sensor signal which, although not as accurate, is free of charge to use.

Alternatively the control system according to the invention is advantageously constructed in such a manner that the at least two sensor systems are designed as an optical sensor, for example as a camera, and as a global positioning sensor (GPS sensor), the sensor signals from the at least two sensor systems being used for track detection with reference to a crop edge and/or for track detection with reference to a working edge. In such a control system for track detection with reference to a stand edge and/or a working edge high demands are imposed with regard to accuracy because the available working width of the agricultural working vehicle is to be utilised as fully as possible to ensure that the crop is fully harvested at the lowest possible working expenditure.

Alternatively the control system according to the invention is advantageously constructed in such a manner that the at least two sensor systems are designed as an optical sensor, for example as a camera, and as a global positioning sensor (GPS sensor), the sensor signals from the global positioning sensor being used for path following detection and the sensor signals from the optical sensor being used to correct the control signal of the path following detection sensor system. In such a path following detection system the GPS sensor signals used primarily for path following detection are adapted to the optimum degree to the local conditions by correction by means of the locally better sensor signals from the optical sensor, If the sensor signals from the optical sensor are not made available due to the situation, or are not made available in an adequate quality, the path following detection system may continue to be operated without problem with the sensor signals from the GPS sensor only.

Alternatively the control system according to the invention is advantageously constructed in such a manner that the at least two sensor systems are designed as a global positioning sensor (GPS sensor) and as a local positioning sensor (LPS), the sensor signals from the global positioning sensor being used for position determination of the local positioning sensor, and the sensor signals from the local positioning sensor being used for the track detection of a tracking system. In such a control system the very accurate global positioning sensor signals, which are expensive to use, are only required for a short time for position determination of the local positioning sensor, so that only small fees for use are incurred. Further track detection is carried out by means of the local positioning sensor system which is free of charge to use.

Alternatively the control system according to the invention is advantageously constructed in such a manner that the at least two sensor systems are designed as a global positioning sensor (GPS sensor) and as a local positioning sensor (LPS), the sensor signals from the global positioning sensor being used for position determination of the local positioning sensor, and the sensor signals from the local positioning sensor being used for the track detection of a tracking system. A route plan thus established is used, for example, in subsequent work steps, e.g. in fertilising the field, for track control of the agricultural working machines used in this case. In such a control system the very accurate global positioning sensor signals, which are expensive to use, are only required for a short time for position determination of the local positioning sensor, so that only small fees for use are incurred. Further track detection is carried out by means of the local positioning sensor system which is free of charge to use.

Alternatively the control system according to the invention is advantageously constructed in such a manner that the at least two sensor systems are designed as an optical sensor, for example as a camera, and as a global positioning sensor (GPS sensor), the sensor signals from the optical sensor being used for track detection during the trip and the sensor signals from the global positioning sensor being used for track detection in the headland.

Alternatively the control system according to the invention is advantageously constructed in such a manner that the at least two sensor systems are designed as an odometry sensor and as a global positioning sensor (GPS sensor), where the sensor signals from the odometry sensor are used to position the agricultural working vehicle and, in conjunction with a route plan, for track detection, and the sensor signals from the global positioning sensor are used for track detection, and wherein a selection is made as to which sensor signal processing algorithm for the track detection sensor system is to be used as a function of one or a plurality of characteristic parameters.

Alternatively the control system according to the invention may be advantageously constructed in such a manner that the at least two sensor systems are designed as a sensor system detecting a crop stand from above and as a sensor system detecting a crop stand in a region close to the ground which both are used for track detection, and at least one further sensor system designed as a wind sensor is provided for detecting the wind strength and/or wind direction, and wherein a selection is made as to which sensor signal processing algorithm for the track detection system is to be used as a function of the sensor signal from the wind sensor system. The sensor system detecting the crop stand from above is advantageously designed as an optical sensor, for example as a camera, and/or as a global positioning sensor (GPS sensor), and the sensor system detecting the crop stand in a region close to the ground is advantageously designed as a mechanical key and/or as an optical sensor detecting the crop stand, for example as a camera. Such a control system is used, for example, for track detection in a maize field by means of a camera sensor system detecting the maize plants from above. If the wind is strong, however, the maize plants are deflected to such a degree that the track detection system would steer the working vehicle in the direction of the deflection. To prevent this the sensor signals from a sensor system detecting the crop stand in a region close to the ground is used in a strong wind, which system may also be designed, for example, as an optical sensor in the form of a camera and detects the stems of the individual rows of plants. The track detection is therefore suitably designed as an optical sensor in the form of a camera and the stems of the individual rows of plants detected. The track detection is therefore suitably optimised so that the working machine is able to complete an optimum harvesting trip.

Alternatively the control system according to the invention may be advantageously constructed in such a manner that the at least two sensor systems are designed as a sensor system detecting a crop stand from above and as a sensor system detecting a crop stand in a region close to the ground, for track detection, and at least one further sensor system designed as a wind sensor is provided for detecting the wind strength and/or wind direction, and where the sensor signals from the sensor system detecting a crop stand from above are influenced by the sensor signals from the sensor system detecting a crop stand in the region close to the ground, the extent of the influence being varied as a function of the sensor signals from the wind sensor system. The sensor system detecting the crop stand from above is advantageously designed as an optical sensor, for example as a camera, and/or as a global positioning sensor (GPS sensor), and the sensor system detecting the crop stand in a region close to the ground is advantageously designed as the mechanical key detecting the crop stand or as an optical sensor, for example as a camera. Such a control system is used, for example, for track detection in a maize field by means of a camera sensor system detecting the maize plants from above. If the wind is strong, however, the maize plants are deflected to such a degree that the track detection system would steer the working vehicle in the direction of the deflection. To prevent this the sensor signals from a sensor system detecting the crop stand in a region close to the ground are given greater consideration in a strong wind, which system may also be designed, for example, as an optical sensor in the form of a camera and detects the stems of the individual rows of plants. The track detection is therefore suitably influenced so that the working machine is able to complete an optimum harvesting trip.

So that the different sensor signal processing algorithms are able to process the different sensor signals from the at least two sensor systems, reliably and to the optimum degree, the sensor signals are standardised in an advantageous further development of the invention so that they are correspondingly comparable and processable.

It is pointed out that the control system according to the invention is not limited to a tracking system but may comprise any type of control systems of an agricultural working vehicle.

The invention is explained in further detail in the following with reference to the attached drawings, in which:
Fig. 1: shows a diagrammatic side view of a first agricultural working vehicle with a control system according to the invention,
Fig. 2: shows a diagrammatic side view of a second agricultural working vehicle with a control system according to the invention,
Fig. 3: shows a diagrammatic side view of a third agricultural working vehicle with a control system according to the invention, and

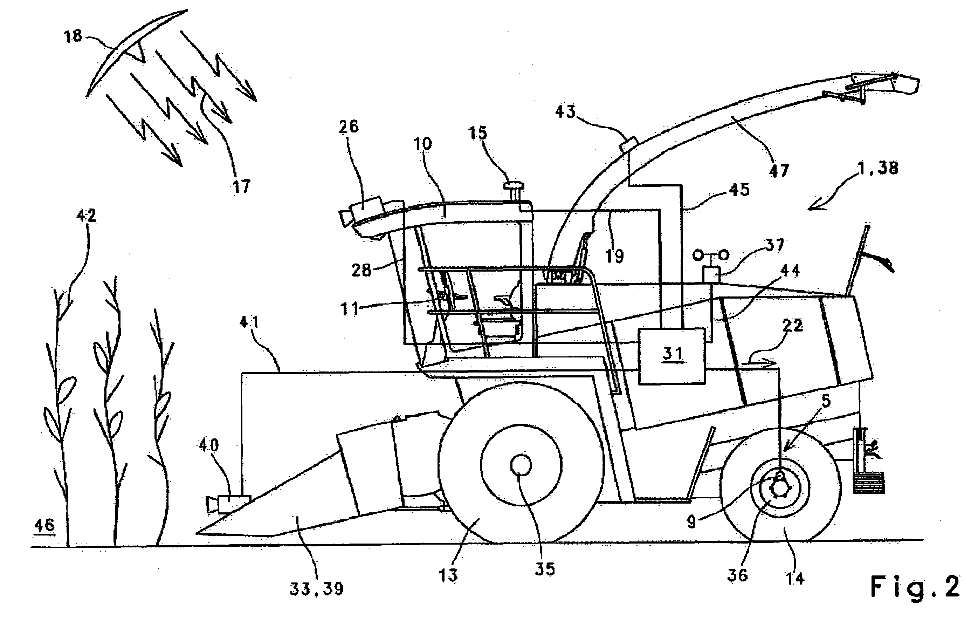

Fig. 2: shows a flow chart to illustrate the sensor fusion according to the invention.

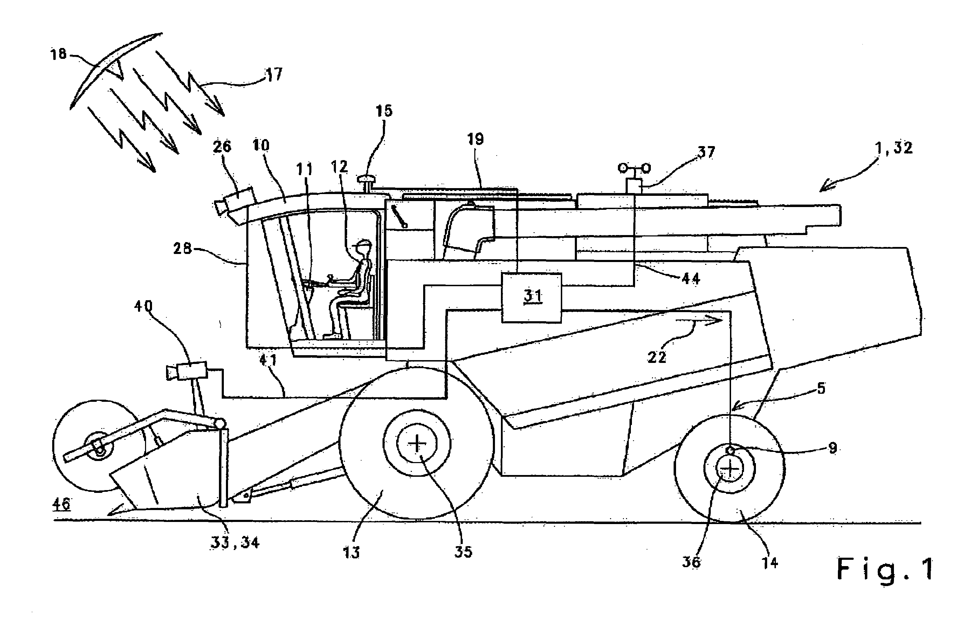

Figure 1 shows, by way of example, an agricultural working vehicle 1 constructed as a combine harvester 32, which vehicle has in its front region an front attachment 33 designed as a corn cutter 34. It lies within the scope of the invention for front attachment 33 to be constructed in any manner. It is pointed out here that front attachment 33 may be designed, for example, as a maize header or pick-up.
Combine harvester 32 of prior art is provided with a drive axle 35 fitted with wheels 13 and a steering axle 36, which is actively connected in a known manner to a steering cylinder 9 of a steering circuit 5. Operator 12 of combine harvester 32 can control the pressure loading of steering cylinder 9 by conventional means, using steering wheel 11 arranged in vehicle cab 10, and hence effect a steering of combine harvester 32.
Combine harvester 32 is provided on the cab roof side with a so-called GPS sensor 15, which generates GPS-based position sensor signals 19 of combine harvester 32 from the position signals 17 from GPS satellite systems 18 when coupled to a control device designed as data processing device 31. These position sensor signals 19 of combine harvester 32 can be used in a known manner for recording the trip route covered by combine harvester 32. A GPS-based automatic steering of combine harvester 32 is performed conventionally so that the GPS-based determined trip route of combine harvester 32 is in the simplest case compared with a theoretical track stored in data processing device 31. If the determined trip route deviates from the theoretical track, guide signals 22, which automatically engage in steering circuit 5 and effect an adaptation of the actual trip route to the theoretical trip route by adjustment of steering cylinder 9, are generated in data processing device 31.
According to the invention GPS sensor 15 forms a first track detection system of a tacking system. A further track detection system comprises, in the exemplary embodiment shown, an image recognition system 26 arranged on vehicle cab 10, which system detects the crop stand, not shown here, from above and is coupled to data processing device 31 in such a manner that image sensor signals 28 are transmitted to data processing device 31. Data processing device 31 generates guide signals 22 by means of image sensor signals 28, which device is able to effect the automatic steering of combine harvester 32 by automatic engagement in steering circuit 5 in a manner similar to the GPS-based track detection system. In any position of corn cutter 34 is arranged a further image recognition system 40 which detects the crop stand in a region close to the ground, not shown. Image sensor signals 41 of image recognition system 41 are also transmitted to data processing device 31, which is able to generate from them, in a similar manner, guide signals 22 for steering circuit 5.
Furthermore, combine harvester 32 has a wind sensor 37 which detects both the wind direction and the wind strength and transmits the generated wind sensor signals 44 to data processing device 31.
A plurality of sensor signal processing algorithms are stored in data processing device 31, where data processing device 31 devices, as a function of characteristic parameters, which sensor signal processing algorithm is used, for example, for tracking, i.e. for generating guide signals 22.
Combine harvester 32 shown can be controlled, for example, by means of position sensor signals 19 generated by the GPS sensor. However, image sensor systems generated by image sensor system 26 always present a much more accurate image of territory 46 to be worked, so that data processing device 31 decides, on the basis of the accuracy defined as a characteristic parameter, to select a sensor signal processing algorithm where image sensor signals 28 from image recognition system 26 are used for generating guide signal 22 instead of position signals 19 from the GPS sensor.

In another exemplary embodiment combine harvester 32 is controlled by means of image sensor signals 28 generated by image recognition system 26. Using wind sensor signals 44 generated by wind sensor 37, data processing device 31 decides to select a sensor signal processing algorithm which uses image sensor signals 41 from an image recognition system 40 close to the ground to correct image sensor signal 28, thereby guaranteeing a more accurate harvesting trip of combine harvester 32 even where the crop is bent by strong wind, e.g. at a wind velocity of over 5 m/s.

Figure 2 shows, by way of example, an agricultural working vehicle 1 constructed as a forage harvester 38, which has in its front region an front attachment 33 designed as maize header 39. It lies within the scope of the invention for front attachment 33 to have any design. It is pointed out here that front attachment 33 may also be designed, for example, as a maize picker, corn cutter or pick-up.
Forage harvester 38 of prior art has a drive axle 35 fitted with wheels 13 and a steering axle 36 fitted with wheels 14, which steering axle is actively connected in a known manner to a steering cylinder 9 of a steering circuit 5. The operator of forage harvester 38 can control the pressure loading of steering cylinder 9, by conventional means, by means of steering wheel 11 arranged in vehicle cab 10, and can therefore effect a steering of forage harvester 38.
Combine harvester 32 is provided on the cab roof side with a so-called GPS sensor 15, which generates GPS-based position sensor signals 19 of forage harvester 38 from position signals 17 from GPS satellite systems 18 when coupled to a control device designed as a data processing device 31. These position sensor signals 19 of forage harvester 38 may be used in a known manner for recording the trip route covered by forage harvester 38. A GPS-based automatic steering of forage harvester 38 is designed conventionally so that the GPS-based determined trip route of forage harvester 38 is compared in the simplest case with a theoretical track stored in data processing device 31. If the determined trip route deviates from the theoretical track, guide signals 22 are generated in data processing device 31, which guide signals automatically engage in steering circuit 5 and effect an adaptation of the actual trip route to the theoretical trip route by adjusting steering cylinder 9.

According to the invention GPS sensor 15 forms a first track detection system of a tracking system. A further track detection system comprises, in the exemplary embodiment shown, an image recognition system 26 arranged on the front of vehicle cab 10, which system detects crop stand 42 from above and is coupled to data processing device 31 in such a manner that image sensor signals 28 are transmitted to data processing device 31. By means of image sensor signals 28, data processing device 31 generates guide signals 22 which can effect the automatic steering of forage harvester 38 by automatic engagement in steering circuit 5 in a similar manner to the GPS-based track detection system. In any position, for example in a central position of maize header 39 viewed transversely to the direction of travel, is arranged a further image recognition system 40 which detects crop stand 42 in a region close to the ground. The central dividing stirrup of maize header 39, or the central tip of the maize header, may be used as a suitable position for mounting image recognition system 40, since it is here that the maize plants are initially conveyed to the outside through maize header 39 during harvesting, so that image recognition system 40 is able to detect the row of plants in front of it very clearly. Image sensor signals 41 of image recognition system 41 are also transmitted to data processing device 31, which is able to generate from them guide signals 22 for steering circuit 5 in a similar manner.
Furthermore, the forage harvester has a wind sensor 37 which detects both the wind direction and the wind strength, and transmits the generated wind sensor signals 44 to data processing device 31.
On upper discharge chute 47 of forage harvester 38 is arranged a crop characteristic sensor 43 which may be designed, for example, as an NIR sensor or as a thermal sensor. Crop characteristic sensor signals 45 generated by crop characteristic sensor 43 are also transmitted to data processing device 31.
A plurality of sensor signal processing algorithms are stored in data processing device 31, data processing device 31 deciding, on the basis of characteristic parameters, which sensor signal processing algorithm is used, for example, for tracking, i.e. for generating guide signals 22 or for surface surveying.
Forage harvester 38 shown may be controlled, for example, by means of position sensor signals 19 generated by the GPS sensor. However, image sensor signals 28 generated by image sensor system 26 always present a much more accurate image of territory 46 to be worked, so that data processing device 31 decides, on the basis of the accuracy defined as a characteristic parameter, where image sensor signals 28 of image recognition system 26 are used for generating guide signal 22 instead of position signals 19 of the GPS sensor.
In another exemplary embodiment forage harvester 38 is controlled by means of image sensor signals generated by image recognition system 26. Using wind sensor signals 44 generated by wind sensor 37, data processing device 31 decides to select a sensor signal processing algorithm which in turn decides, on the basis of the detected wind sensor signals 44, to use image sensor signals 41 of an image identification system 40 close to the ground for generating guide signals 22, since these illustrate more accurately the stems of crop 42 to be cut, thereby guaranteeing an optimum harvesting trip of forage harvester 38 even if the crop is bent by strong wind, for example at a wind velocity of over 5 m/s.
In a further exemplary embodiment a sensor signal processing algorithm is selected in data processing device 31 on the basis of a characteristic parameter, position sensor signal 19 of the GPS sensor being corrected by image sensor signal 28 of image recognition system 26 being corrected for generating guide signals 22. Furthermore, crop characteristic sensor signals 45 detected by crop characteristic sensor 43 are associated with the correspondingly corrected position signals and stored in data processing device 31 so that they can be recalled as a surface map with allocated crop characteristic information.
In a further exemplary embodiment of the forage harvester 38 the image recognition system 26 detect the crop 42 from above and image sensor signals 28 are produced, by means of those the data processing device 31 can expect a quantitative harvested crop yield. In connection with on the part of the GPS senor 15 determined position sensor signals 19 the data processing device 31 produces control signals for the discharge bent 47 of the forage harvester 38, so that an optimal overloading is ensured on beside or behind the forage harvester 38 driving load cars. Additionally it is possible that at the discharge bent 47 a additional image recognition system (here not shown) is arranged that can detect the filling level of the load cars. The data processing device 31 selects a sensor signal processing algorithm, which controls the discharge bent 47 as a function of the filling level of the load car in such a manner, that in dependence of the expected harvested crop yield and the filling level of a detected load car, the discharge bent 47 will be adjusted to fill another load car driving beside or behind the forage harvester 38, so that not during harvesting of a high yield quantity a load car is in such a manner filled that the discharge bent 47 must be swiveled in the direction of another load car, which leads to high crop losses.

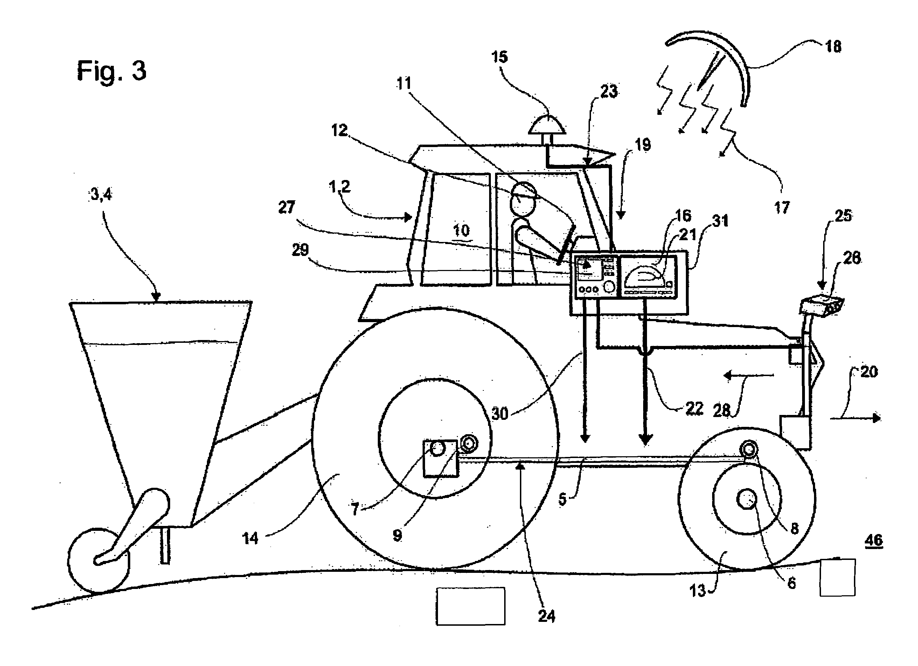

Figure 3 shows, by way of example, an agricultural working vehicle 1, constructed as a tractor 2, to which a working unit 3, designed as a manure spreader 4, is coupled in its rearward region. It lies within the scope of the invention for working unit 3 to have any design and can be adapted at any point on working vehicle 1. For example, it is pointed out here that working unit 3 may also be designed as a grubber, scarifying machine, herbicide sprayer or, for example, as an integral or multiple reaper assigned to the tractor in different positions.
Tractor 2 of prior art is provided with a hydraulic steering circuit 5, which is actively connected in a known manner to steering cylinders 8, 9 assigned to front axle 6 and/or rear axle 7 and/or wheels 13, 14. Operator 12 of tractor 2 can control conventionally the pressure loading of steering cylinders 8, 9 using steering wheel 11 arranged in vehicle cab 10, and can therefore effect a steering of tractor 2, where, according to the design of steering circuit 5, only wheels 13 of front axle 6, wheels 13, 14 of a vehicle axle 6, 7 jointly, or each wheel 13, 14 separately, can be steered.
Tractor 2 is provided on the cab roof side with a so-called GPS sensor 15, which, when coupled to a data processing unit 16, generates GPS-based position sensor signals 19 of tractor 2 from position signals 17 from GPS satellite systems 18. These position sensor signals 19 of tractor 2 are used, in a known manner, for recording trip route 20 covered by tractor 2. A GPS-based automatic steering of tractor 2 is constructed conventionally so that the determined trip route 20 of tractor 2 is compared in the simplest case with a theoretical track 21 stored in data processing unit 16. If determined trip route 20 deviates from theoretical track 21, guide signals 22 which automatically engage in steering circuit 5 and effect an adaptation of actual trip route 20 to theoretical trip route 21 by adjustment of steering cylinders 8, 9 are generated in data processing unit 16.

According to the invention GPS sensor 15 and the associated data processing device 16 form a first track detection system 23 of a tracking system 24, which, in addition to the components GPS sensor 15, data processing device 16 and steering circuit 5 already described, is also provided with at least one further track detection system 25. The further track detection system 25 comprises, in the exemplary embodiment shown, an image recognition system 26 assigned to tractor 2 on the front side, which system is coupled to a data processing device 27 in such a manner that image sensor signals 28 are converted to real images 29 of recorded territory 46 in data processing device 27, and displayed if necessary. Furthermore, data processing device 27 assigned to image recognition system 26 generates guide signals 30, which can effect the automatic steering of tractor 2 by automatic engagement in steering circuit 5 in a similar manner to the GPS-based track detection system 23. A common data processing device 31, in which a plurality of sensor signal processing algorithms are stored, is assigned to the two track detection systems 23, 25.

In another not shown example the agricultural working vehicle is a sugar beet harvester. The sugar beet harvester has for example an image recognition system, which detects the sugar beets from above. Additionally the sugar beet harvester has an image recognition system, which detects the sugar beets close to the ground.
Due to for example strong dust formation during the harvest it can come to the fact that the image sensor signal detected by the upper image recognition system detects very exactly the rows of the sugar beets, but due to the dust the signal is very unstable, for example very strongly noised.
Due to for example strong weeds between the individual sugar beets it can come to it that the image sensor signal detected by the lower image recognition system is very stable, for example little noise, but due to weeds is very inaccurate.
If the characteristic parameter is the accuracy of the sensor signals, then the control system would select a sensor signal processing algorithm, which uses primarily the image sensor signals of the upper image recognition system.
If the characteristic parameter is the noise on the sensor signals, then the control system would select a sensor signal processing algorithm, which uses primarily the image sensor signals of the lower image recognition system.

Because a plurality of characteristic parameters are stored in the control system, and the control system uses them in a weighted manner, the for example described control system will select a sensor signal processing algorithm, which uses the sensor signals of both image recognition systems, so that the compromise will obtain an optimal harvest result.

It is pointed out that the examples of the different designs of agricultural working machines mentioned must not be regarded as final or limiting. The examples described may also be used on other agricultural working machines when suitably adapted.

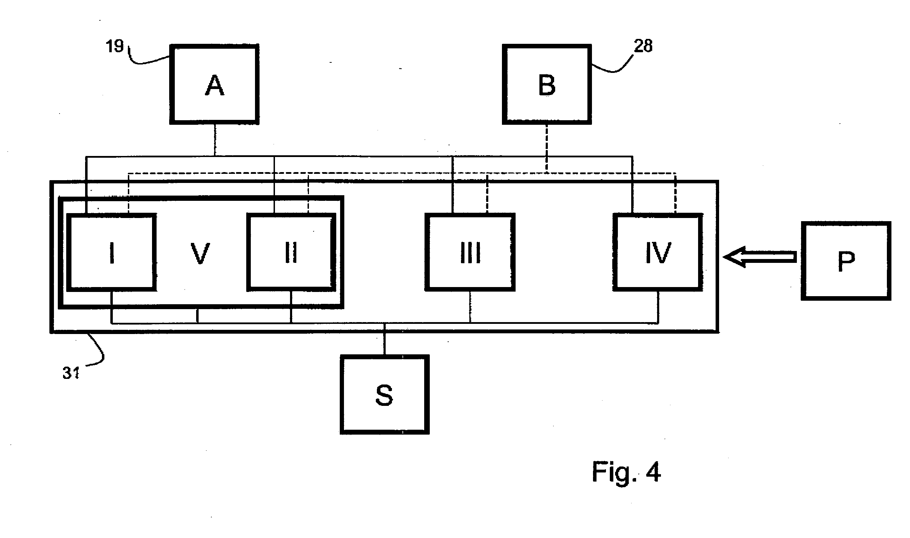

A flow chart of the control system according to the invention is shown in Figure 4 for the purposes of illustration. Sensor signal A may be the position sensor signal 19 generated by GPS sensor 15 according to the example shown in Figure 1, and is transmitted to data processing device 31. Sensor signal B, according to the example shown in Figure 1, may be image sensor signal 28 generated by image recognition system 26, which signal is also transmitted to data processing device 31. In data processing device 31 five sensor signal processing algorithms I II, III, IV, V are present, for example, which are able to process sensor signals A, B, in different ways. A first sensor signal processing algorithm I is designed, for example, so that it selects at least one sensor signal A or B for signal processing. A second signal processing algorithm II is designed, for example, so that it balances the two sensor signals A, B, with each other. A third sensor signal processing algorithm III is designed, for example, so that the one sensor signal A is used for correcting the other sensor signal B. A fourth sensor signal processing algorithm IV is designed, for example, so that it switches between the two sensor signals A and B as a function of general conditions. A fifth sensor signal processing algorithm V is designed, for example, so that one sensor signal processing algorithm I is combined with another sensor signal processing algorithm II to generate a control signal S.
A selection is made in data processing device 31, on the basis of characteristic parameters P, such as the accuracy of control signal S generated by sensor signal processing algorithms I, II, III, IV, V and/or the accuracy of sensor signals A, B and/or the noise on sensor signals A, B and/or the availability of sensor signals A, B and/or the topicality of the sensor signals A, B and/or the costs incurred in receiving or generating sensor signals A, B and/or the time required to receive or generate sensor signals A, B and/or the weather conditions surrounding the working vehicle and/or the soil conditions surrounding the working vehicle and/or the reliability of sensor signals A, B and/or the employment which is to be done with the control system and/or the security of the working vehicle, as to which of signal processing algorithms I or II or III or IV or V present is to be used for generating control signal S in order to achieve the best possible working result according to the situation.

### List of reference symbols:

| | | | |
|---|---|---|---|
| 1 | Working vehicle | 31 | Data processing device |
| 2 | Tractor | 32 | Combine harvester |
| 3 | Working unit | 33 | Front attachment |
| 4 | Manure spreader | 34 | Corn cutter |
| 5 | Steering circuit | 35 | Drive axle |
| 6 | Front axle | 36 | Steering axle |
| 7 | Rear axle | 37 | Wind sensor |
| 8 | Steering cylinder | 38 | Forage harvester |
| 9 | Steering cylinder | 39 | Maize header |
| 10 | Vehicle cab | 40 | Image recognition system |
| 11 | Steering wheel | 41 | Image sensor signal |
| 12 | Operator | 42 | Crop |
| 13 | Wheel | 43 | Crop characteristic sensor |
| 14 | Wheel | 44 | Wind sensor signal |
| 15 | GPS sensor | 45 | Crop characteristic sensor signal |
| 16 | Data processing device | 46 | Territory |
| 17 | Position signal | 47 | Discharge bent |
| 18 | GPS satellite system | A | Sensor signal |
| 19 | Position sensor signals | B | Sensor signal |
| 20 | Trip route | I | Sensor signal processing algorithm |
| 21 | Theoretical track | II | Sensor signal processing algorithm |
| 22 | Guide signal | III | Sensor signal processing algorithm |
| 23 | Track detection system | IV | Sensor signal processing algorithm |
| 24 | Tracking system | V | Sensor signal processing algorithm |
| 25 | Track detection system | P | Characteristic parameter |
| 26 | Image recognition system | S | Control signal |
| 27 | Data processing device | | |
| 28 | Image sensor signal | | |
| 29 | Image | | |
| 30 | Guide signal | | |

## Claims

1. A control system for agricultural working vehicles (1) with at least two sensor systems (15, 26, 37, 40, 43), which generate sensor signals (A, B, 19, 28, 41, 44, 45), wherein the sensor signals (A, B, 19, 28, 41, 44, 45) are vehicle-dependent or dependent on the crop characteristics or dependent on the environment, or a combination of these,
**characterised in that**
at least one first and at least one second sensor signal processing algorithm (I, II, III, IV,V) is present in the control system, and **in that** a selection is made as to which sensor signal processing algorithm (I, II, III, IV,V) is to be used as a function of at least one characteristic parameter (P).

2. The control system according to claim 1, **characterised in that**
a. a sensor signal processing algorithm (I) selects at least one sensor signal (A, B, 19, 28, 41, 44, 45) of the at least two sensor systems (15, 26, 37, 40, 43) for signal processing
b. a sensor signal processing algorithm (II) balances at least two sensor signals (A, B, 19, 28, 41, 44, 45) of the at least two sensor systems (15, 26, 37, 40, 43) with each other
c. a sensor signal processing algorithm (III) uses a sensor signal (A, B, 19, 28, 41, 44, 45) of at least one sensor system (15, 26, 37, 40, 43) to correct a sensor signal (A, B, 19, 28, 41, 44, 45) of a second sensor system (15, 26, 37, 40, 43)
d. a sensor signal processing algorithm (IV) switches between sensor signals (A, B, 19, 28, 41, 44, 45) of the at least two sensor systems (15, 26, 37, 40, 43) as a function of general conditions,
e. a sensor signal processing algorithm (V) combined at least one sensor signal processing algorithm (I,II,III,IV) with at least one another sensor signal processing algorithm (I,II,III,IV) to generate a control signal (S),
wherein two or a plurality of the signal processing algorithms (I, II, III, IV, V) are present in the control system.

3. The control system according to one of the preceding claims, **characterised in that** the at least one characteristic parameter (P)
- is the accuracy of the control signal (S) generated by the sensor signal processing algorithms (I, II, III, IV, V),
- is the accuracy of the sensor signals (A, B, 19, 28, 41, 44, 45) of the at least two sensor systems (15, 26, 37, 40, 43),
- is the noise on the sensor signals (A, B, 19, 28, 41, 44, 45) of the at least two sensor systems (15, 26, 37, 40, 43),
- is the availability of the sensor signals (A, B, 19, 28, 41, 44, 45) of the at least two sensor systems (15, 26, 37, 40, 43),
- is the topicality of the sensor signals (A, B, 19, 28, 41, 44, 45) of the at least two sensor systems (15, 26, 37, 40, 43),
- are the costs incurred in receiving or generating sensor signals (A, B, 19, 28, 41, 44, 45) of the at least two sensor systems (15, 26, 37, 40, 43), is the time required to receive or generate the sensor signals (A, B, 19, 28, 41, 44, 45) of the at least two sensor systems (15, 26, 37, 40, 43),
- are the weather conditions surrounding the working vehicle (1),
- are the soil conditions surrounding the working vehicle (1),
- is the reliability of the sensor signals (A, B, 19, 28, 41, 44, 45) of the at least two sensor systems (15, 26, 37, 40, 43),
- is the employment which is to be done with the control system,
- is the security of the working vehicle (1),
or comprises a combination of these.

4. The control system according to Claim 3, **characterised in that** a plurality of characteristic parameters (P) are stored in the control system and can be used in a weighted manner, wherein the weighting of the characteristic parameters (P) can be varied according to the situation.

5. The control system according to one of Claims 3 or 4, **characterised in that** the at least two sensor systems are designed as an optical sensor, for example as a camera (26, 40), and as a global positioning sensor (GPS sensor) (15) for track detection, and at least one further sensor system (43) designed as an infrared sensor and/or as a thermal sensor is present for the crop characteristic detection, and wherein the sensor signals (28, 41, 19) of the track detection sensor systems and the sensor signals (45) of the at least one crop characteristic detection sensor system are stored combined and capable of being recalled.

6. The control system according to one of Claims 3 or 4, **characterised in that** the at least two sensor systems are designed as an optical sensor, for example as a camera (26, 40), and as a low precision global positioning sensor (GPS sensor) (15), wherein the sensor signals (28, 41, 19) of the at least two sensor systems are used for track detection on the basis of a swathe covered on the field.

7. The control system according to one of Claims 3 or 4, **characterised in that** the at least two sensor systems are designed as an optical sensor, for example as a camera (26, 40), and as a global positioning sensor (GPS sensor) (15), wherein the sensor signals (28, 41, 19) of the at least two sensor systems are used for track detection on the basis of a crop edge and/or for track detection on the basis of a working edge.

8. The control system according to one of Claims 3 or 4, **characterised in that** the at least two sensor systems are designed as an optical sensor, for example as a camera (26, 40) and as a global positioning sensor (GPS sensor) (15), wherein the sensor signals (19) of the global positioning sensor (15) are used for path following detection and the sensor signals (28, 41) of the optical sensor are used to correct the control signal of the path following detection sensor system.

9. The control system according to one of Claims 3 or 4, **characterised in that** the at least two sensor systems are designed as a global positioning sensor (GPS sensor) (15) and as a local positioning sensor (LPS sensor), wherein the sensor signals (19) of the global positioning sensor (15) are used for the position determination of the local positioning sensor, and the sensor signals of the local positioning sensor are used for the track detection of a tracking system.

10. The control system according to one of Claims 3 or 4, **characterised in that** the at least two sensor systems are designed as a global positioning sensor (GPS sensor) (15) and as a local positioning sensor (LPS sensor), wherein the sensor signals (19) of the global positioning sensor (15) are used for the position determination of the local positioning sensor, and the sensor signals of the local positioning sensor are used for establishing a route plan.

11. The control system according to one of Claims 3 or 4, **characterised in that** the at least two sensor systems are designed as an optical sensor, for example as a camera (26, 40) and as a global positioning sensor (GPS sensor) (15), wherein the sensor signals (28, 41) of the optical sensor are used for the track detection during the trip and the sensor signals (19) of the global positioning sensor (15) are used for track detection in the headland.

12. The control system according to one of Claims 3 or 4, **characterised in that** the at least two sensor systems are designed as an odometry sensor and as a global positioning sensor (GPS sensor) (15), wherein the sensor signals of the odometry sensor are used for positioning the agricultural working vehicle (1) and are used
in conjunction with a route plan for track detection, and the sensor signals (19) of the global positioning sensor (15) are used for track detection and wherein a selection is made as to which sensor signal processing algorithm for the track detection sensor system is to be used as a function of one or a plurality of characteristic parameters (P).

13. The control system according to one of Claims 3 or 4, **characterised in that** the at least two sensor systems are designed as a sensor system detecting a crop stand from above and as a sensor system detecting a crop stand in a region close to the ground which both are used for track detection, and at least one further sensor system, designed as a wind sensor (37), is provided for detecting the wind strength and/or wind direction, and wherein a selection is made as to which sensor signal processing algorithm for the track detection system is to be used as a function of the sensor signal (44) of the wind sensor system (37).

14. The control system according to Claims 3 or 4, **characterised in that** the at least two sensor systems are designed as a sensor system detecting a crop stand from above and as a sensor system detecting a crop stand in a region close to the ground which both are used for track detection, and at least one further sensor system, designed as a wind sensor, is provided for detecting the wind strength and/or wind direction, and wherein the sensor signals of the sensor system detecting a crop stand from above are influenced by the sensor signals of a sensor system detecting a crop stand in a region close to the ground, wherein the extent of the influence is varied as a function of the sensor signals (44) of the wind sensor system (37).

15. The control system according to one of Claims 13 or 14, **characterised in that** the sensor system detecting the crop stand from above is designed as an optical sensor, for example as a camera (26), and/or as a global positioning sensor (GPS sensor) (15) and the sensor system detecting the crop stand in a region close to the ground is designed as a mechanical key and/or as an optical sensor, for example a camera (40) detecting the crop stand in a region close to the ground.

16. The control system according to one of the preceding claims, **characterised in that** the sensor signals (A, B, 19, 28, 41, 44, 45) of the sensor systems (15, 26, 37, 40, 43) are standardised for signal processing in the at least one first and/or the at least one second sensor signal processing algorithm (I, II, III, IV, V).
